# FASCICULE DE BREVET EUROPEEN

(11) **EP 0 769 363 B1**
(45) Date de publication et mention de la délivrance du brevet: **12.03.2003**
(21) Numéro de dépôt: 96450020.1
(22) Date de dépôt: 16.10.1996
(51) Int. Cl.: B29C 70/02, B64G 1/58, D04H 13/00, B64C 1/40, F02K 9/97, F02K 9/34, F42B 15/34

(54) **Pièce en matériau de protection thermique basse densité renforcé et son procédé d'obtention**
Wärmeschutzartikel aus verstärktem Verbundstoff niedriger Dichte und Verfahren zu seiner Herstellung
Thermal protection article made of low density reinforced material and process for its manufacture

(30) Priorité: 20.10.1995 FR 9512597
(43) Date de publication de la demande: 23.04.1997
(73) Titulaire: AEROSPATIALE SOCIETE NATIONALE INDUSTRIELLE, Société Anonyme, 75781 Paris Cedex 16 (FR)
(72) Inventeur: Pastureau, Nicole, 33320 Eysines (FR); Hee, Michel Daniel, 33480 Avensan (FR); Cussac, David François Christian, 33260 La Teste (FR); Richard, Jean-Claude, 33100 Bordeaux (FR)
(74) Mandataire: Thébault, Jean-Louis

(56) Documents cités:
- EP-A- 0 189 720
- EP-A- 0 273 391
- FR-A- 2 268 102
- FR-A- 2 538 507
- FR-A- 2 625 793
- GB-A- 2 191 115
- US-A- 3 349 814
- US-A- 3 532 588
- US-A- 3 603 260
- US-A- 3 951 718
- US-A- 4 655 866

## Description

La présente invention a trait à un matériau ablatif basse densité destiné à la protection thermique notamment de parties de véhicules spatiaux lors de leur rentrée dans l'atmosphère terrestre.

Lors d'une rentrée dans l'atmosphère un véhicule tel qu'une sonde, une capsule, un véhicule habité, etc... doit affronter des flux de chaleur intenses et les parties les plus exposées doivent être à cet effet protégées thermiquement.

On a mis au point, pour cela en particulier des matériaux isolants dits ablatifs revêtant les structures à protéger et dont la destruction progressive sous l'action du flux de chaleur entraîné par une rentrée dans l'atmosphère, protège de la chaleur la structure ainsi revêtue grâce à divers mécanismes que l'on peut résumer ainsi :
- stockage de l'énergie avec pour conséquence une élévation de la température interne du matériau ablatif ;
- réaction endothermique, à savoir : dépolymérisation, fusion, sublimation, vaporisation ;
- perte d'énergie par rayonnement ;
- flux de produits gazeux opposé au flux de chaleur.

Cette protection par destruction de l'isolant est l'une des plus efficaces pour affronter les flux de chaleur intenses produits par une rentrée atmosphérique.

Ce type de matériau, connu depuis de nombreuses années, est constitué d'un élastomère et/ou d'une résine silicone. Il existe par exemple un élastomère du type RTV (Room Temperature Vulcanisation) chargé avec des composants organiques (composés carbonés, liège,...) ou inorganiques (SiC, Silice, Alumine...).

Ce matériau est utilisé tel quel et mis en place sous forme par exemple de panneaux ou d'éléments rapportés, notamment par collage, sur la surface à protéger.

Afin d'empêcher un éventuel écoulement du matériau ablatif sous le flux de chaleur, on a pensé à insérer la matrice constitutive du matériau, composée par exemple d'un élastomère RTV, d'écosphères de silice et de microballons phénoliques et/ou d'autres charges, dans une structure de type nid d'abeilles.

On a réalisé ainsi des panneaux de revêtement de protection thermique plans, légers, résistants mécaniquement et ayant de bonnes propriétés réfractaires.

Par ailleurs, en ayant recours à des structures en nid d'abeilles flexibles dans différentes directions, on a pu réaliser des panneaux de revêtement incurvés.

Cette technique consiste à préparer la structure en nid d'abeilles, par exemple par entaillage des parois des cellules, pour qu'elle puisse se cintrer, puis à garnir les cellules d'une matrice siliconée de formulation appropriée, à compacter la matrice et à mettre en forme à la presse l'ensemble.

La flexibilité d'une telle structure en nid d'abeilles a cependant des limites dans le degré de courbure des panneaux réalisables suivant cette technique qui pose par ailleurs le problème du remplissage qui doit être minutieux et sans vide des cellules de la structure en nid d'abeilles.

Enfin, le renfort constitué par cette structure est nécessairement homogène dans toute la masse du panneau final, ce qui ne permet pas de renforcer de manière différentielle le panneau, selon ses différentes parties. Par exemple, s'agissant d'un panneau de bord d'attaque, il n'est pas possible de renforcer plus fortement les parties du panneau plus exposées, la technique de renforcement, comme décrite précédemment, procédant par tout ou rien.

Par GB 2 191 115, il est connu un revêtement ablatif de protection thermique destiné à recouvrir la face interne d'un réservoir de carburant solide de fusée.

Ce revêtement est constitué d'une armature tissée noyée dans une matrice de polymère. L'armature tissée présente des fils de trame ou de chaîne qui ont subi ponctuellement des distensions en forme de boucles suivant une orientation orthogonale au plan de l'armature et s'étendant dans l'épaisseur du revêtement composite. Toutefois, cette armature est d'abord réalisée avec une distribution déterminée des boucles en saillie, puis l'armature est placée dans un moule et noyée dans une matrice. Une fois le revêtement réalisé, on ne peut plus modifier le renfort.

La présente invention vise à proposer une nouvelle technique de renforcement des matériaux ablatifs basse densité, permettant à la fois l'obtention de formes pouvant être complexes et à courbures accentuées et la modulation locale, à volonté, du renfort sur la pièce en forme.

A cet effet, l'invention a pour objet une pièce en matériau protecteur thermique ablatif basse densité renforcé comprenant une matrice d'élastomère et/ou de résine silicone chargée de composants organiques et/ou inorganiques, caractérisée en ce que le renfort est constitué de tronçons de fils ou analogues, de céramique ou de verre ou de matériaux organiques, agencés dans la masse de ladite matrice suivant de directions sensiblement orthogonales à au moins l'une des faces de la pièce et affleurant, à l'une de leurs extrémités au moins, au moins l'une desdites faces, lesdites fibres étant, dans un mode de réalisation particulier, imprégnées d'une résine phénolique polymérisée.

Les tronçons de fil sont avantageusement distribués de manière régulière et de préférence en quinconce.

Le cas échéant la pièce peut comporter des zones, celles par exemple les plus sollicitées par le flux thermique, présentant un nombre de tronçons de fils par unité de surface supérieur à celui d'autres zones moins sollicitées;

L'invention a également pour objet un procédé d'obtention de telles pièces, caractérisé en ce qu'après moulage aux formes et dimensions générales de ladite pièce à l'aide d'une matrice de silicone chargée, on met en place par piquage lesdits tronçons de fils.

Pour préserver la face de la pièce directement frappée par l'aiguille de la machine à piquer, ladite face est avantageusement revêtue d'un tissu ou d'un feutre de silice ou de verre ou encore de matériaux organiques.

Suivant une variante de mise en oeuvre du procédé on utilise des fils pré-imprégnés d'une résine phénolique appropriée et, après piquage, on polymérise cette résine.

Suivant une autre variante, on utilise des fils non imprégnés et, après piquage, on imprègne la pièce d'une résine phénolique appropriée et on polymérise cette résine.

Après polymérisation de la résine phénolique, les faces de la pièce, munie ou non dudit tissu ou feutre sur l'une de ses faces, sont arasées pour éliminer les parties saillantes de fil. On peut encore réaliser un usinage final pour mettre la pièce aux cotes exactes.

D'autres caractéristiques et avantages ressortiront de la description qui va suivre de modes de mise en oeuvre du matériau selon l'invention, description donnée à titre d'exemple uniquement et en regard des dessins annexés sur lesquels
- Figure 1 est une vue schématique en perspective d'une pièce échantillon constituée du matériau conforme à l'invention ;
- Figure 2 est un schéma illustrant un mode de mise en place des 1 renforts dans une pièce du type de la figure 1 ;
- Figure 3 est une vue en perspective d'un panneau en forme selon l'invention destiné à la protection thermique d'un bord d'attaque d'un véhicule spatial par exemple, et
- Figure 4 est une coupe de la pièce de la figure 3 illustrant un mode d'implantation des renforts.

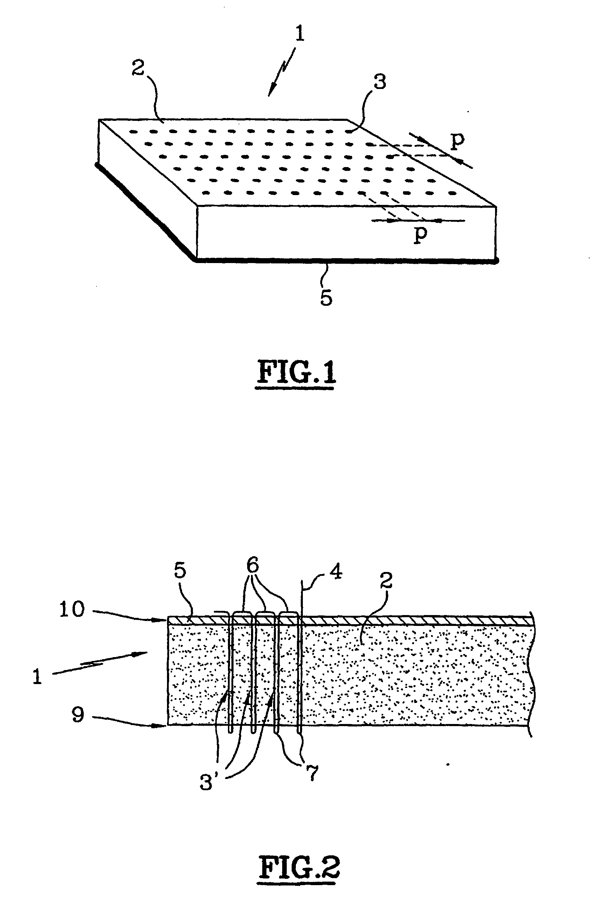

Sur la figure 1 on a représenté en 1 un bloc parallélépipèdique constitué en un matériau ablatif basse densité renforcé conformément à l'invention et comprenant une matrice 2 d'élastomère silicone et des charges de différentes natures, en particulier des écosphères de silice et des microballons de résine phénolique, dont les rôles sont de réduire la densité du matériau et, par leurs propriétés thermiques, de réduire la conductivité thermique et donc de bloquer la chaleur radiative dans le matériau et, enfin, de contribuer, par les réactions qui s'établissent au sein du matériau en cours d'ablation, à enrichir la couche résiduelle carbonée à la surface de l'ablatif, c'est-à-dire à fournir à cette couche une bonne résistance structurale et de bonnes propriétés réfractaires.

De nombreuses formulations ont été proposées pour de telles matrices, incluant ou non des additifs destinés notamment à augmenter les propriétés mécaniques et réfractaires du matériau ablatif. La présente invention ne vise pas un type particulier de formulation, mais concerne essentiellement le renforcement de telles matrices quelles que soient leur composition.

Comme on peut l'observer sur la figure 1, la pièce 1 comprend des picots rigides 3 distribués de manière régulière dans la masse de la matrice. Les picots 3 sont des tronçons rectilignes de fils de céramique ou de verre ou organiques agencés orthogonalement à la face plane supérieure de la pièce 1. Ils s'étendent dans toute l'épaisseur de la pièce et affleurent donc les deux faces opposées.

La grille de répartition des picots 3 est à pas P carré de quelques millimètres, une dizaine par exemple.

Suivant un mode de mise en place préféré, également objet de la présente invention, d'un tel renfort, les picots 3 sont insérés dans la matrice 2 par piquage à l'aide d'un fil approprié.

Par exemple on peut utiliser des fibres verre/céramique de NEXTEL 312 ou 440 (commercialisés par la Société 3M), des fibres organiques du type fil de KEVLAR (commercialisés par la Société DUPONT de NEMOURS).

La rigidification des tronçons de fils ou picots 3, après piquage, est assurée par polymérisation d'une résine d'imprégnation appropriée.

Comme résine phénolique appropriée on peut utiliser des résines de la famille des resols ou celles de la famille des novolaques, mais aussi les résines époxy.

Le piquage est effectué à l'aide d'une machine appropriée.

On a schématisé sur la figure 2, un mode de piquage d'une pièce 1 du type de la figure 1.

L'aiguille (non représentée sur la figure 2) se présente sur l'une des faces de la pièce 1 (la face supérieure sur la figure 2) perpendiculairement et traverse la pièce de part en part en entraînant le fil 4 qui fait ainsi, à chaque aller-retour de l'aiguille au travers de la pièce 1, un aller-retour 3' qui constituera ultérieurement un picot 3.

Sur la face supérieure de la pièce 1, afin de protéger la matrice dont des morceaux ou particules pourraient être arrachés par l'aiguille au sortir de la pièce, est disposé un tissu ou un feutre 5 de fibres de verre par exemple. Ce tissu ou feutre évite par ailleurs l'incrustation dans le matériau de la pièce 2 des parties 6 de fil 4 de liaison entre deux piquages consécutifs, suite à la traction exercée sur le fil par l'aiguille qui s'enfonce dans la pièce.

Sur la face inférieure de la pièce 1, l'aiguille débouche et forme une boucle 7 à chaque piquage.

Une fois les opérations de piquage terminées, on réalise une imprégnation de la pièce 1 avec de la résine appropriée, on polymérise et, enfin, on usine la pièce. A cet effet, on arase, en 9, la face inférieure de la pièce 1 de la figure 2 afin d'enlever les boucles 7 et on fait de même, en 10, pour enlever les tronçons de fils 6 à la surface du tissu ou feutre 5. Ce tissu ou feutre 5 est représenté sous la même référence numérique sur la figure 1, en face inférieure de la pièce.

La technique selon la présente invention présente l'avantage que le renfort de la matrice est effectué après moulage de la matrice aux formes et dimensions de la pièce à obtenir et que ce renfort peut être adapté, c'est-à-dire accentué par exemple dans les zones les plus sollicitées de la pièce.

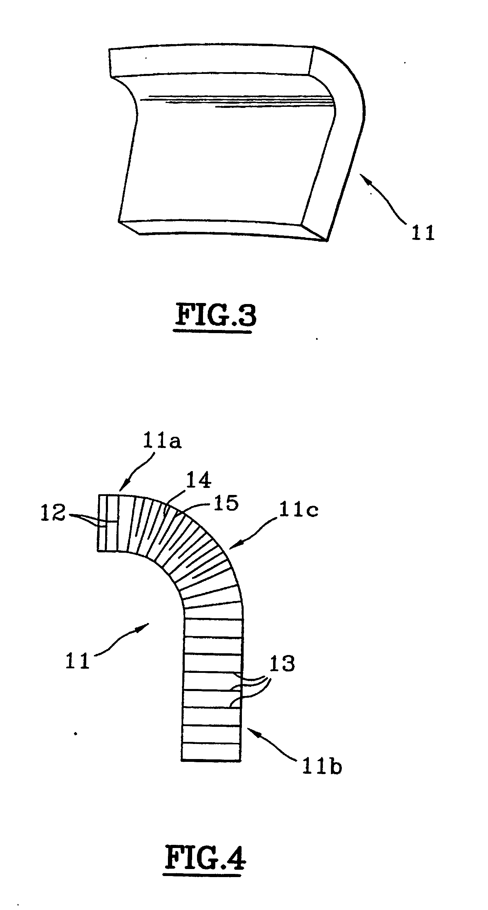

La figure 3 illustre à titre d'exemple un panneau 11 destiné à constituer un élément de bord d'attaque, réalisé par moulage d'une matrice constituée par exemple d'un élastomère silicone, du type RTV 141, chargé d'écosphères de silice et de microballons phénoliques.

La technique de réalisation d'un tel panneau formé d'un tel matériau est bien connue et n'a pas besoin d'être détaillée.

La figure 4 est une coupe du panneau de la figure 3 illustrant un mode d'implantation des éléments de renfort constitués par des picots analogues à ceux 3 de la figure 1.

Après démoulage de la pièce 11, on va procéder à son piquage, à l'aide d'un fil approprié, du type mentionné plus haut, et d'une machine à piquer dont l'aiguille sera présentée de façon à pénétrer dans la matrice de la pièce sur l'une ou l'autre des faces opposées, en fonction du type de renfort à insérer, normalement à la surface.

Pour réaliser des picots tels que 12 ou 13 affleurant les deux faces opposées de la pièce 11, l'aiguille attaquera la face la plus facile d'accès, la pièce étant à cet effet placée dans un berceau de positionnement et maintien.

Le procédé de l'invention permet de densifier, si on le souhaite, une zone particulière plus exposée de la pièce, par exemple la partie 11a, en implantant des picots 12 à un pas plus faible que celui des picots 13 d'une partie 11b affrontant les flux thermiques sous des incidences plus faibles.

Dans les parties les plus cintrées telles que 11c de la pièce, on peut insérer par piquage des picots tels que 14 traversant la pièce de part en part et, dans l'intervalle entre deux picots adjacents, des picots tels que 15 affleurant la face convexe de la pièce mais ne débouchant pas sur la face concave, en sorte de conserver un écart sensiblement constant entre les fils, dans toutes les directions. La profondeur de pénétration de ces picots 15 peut bien entendu être réglée.

Les picots 12 à 15 peuvent être avantageusement répartis de manière régulière dans chaque zone et en quinconce, les picots ayant une densité par unité de surface variant d'une zone à une autre.

La face d'attaque par l'aiguille peut être revêtue au préalable d'un tissu ou d'un feutre tel que 5.

La rigidification des picots 12 à 15 peut être obtenue de deux manières.

Le fil utilisé pour le piquage est pré-imprégné d'une résine appropriée, par exemple une résine phénolique. Après mise en place des fils, la résine des fils est polymérisée puis la pièce usinée aux cotes de la pièce finale, comme indiqué à propos de la figure 2 (arasement des faces de la pièce).

Suivant une seconde méthode, le fil utilisé n'est pas pré-imprégné et après piquage, la pièce est soumise à une opération d'imprégnation à l'aide d'une résine appropriée, puis à une opération de polymérisation de la résine et enfin à un usinage comme ci-dessus.

Du fait que le renfort est réalisé après moulage de la pièce on peut donner à celle-ci une forme complexe avec des courbures localisées importantes. Il sera toujours possible d'accéder à l'une des faces de la pièce pour y insérer perpendiculairement ou sensiblement perpendiculairement des fils, sur toute l'épaisseur ou non de la pièce et avec un motif de distribution quelconque.

Enfin, l'invention n'est évidemment pas limitée aux exemples de réalisation décrits ci-dessus mais en couvre au contraire toutes les variantes tant en ce qui concerne la nature de la matrice de silicone chargée, que la nature des fils piqués ou introduits d'une autre manière dans la masse de la matrice, le motif de distribution des fils, la nature de la résine d'imprégnation des fils, les modalités de mise en place et polymérisation de cette résine, ainsi que les formes, dimensions et destination des pièces réalisables en un tel matériau ablatif renforcé.

## Revendications

1. Pièce en matériau protecteur thermique ablatif basse densité renforcé comprenant une matrice (2) d'élastomère et/ou de résine silicone, chargée de composants organiques et/ou inorganiques, **caractérisée en ce que** le renfort est constitué de tronçons rectilignes et rigidifiés de fils ou analogues (3, 3', 12 à 15), de céramique ou de verre, ou de matériaux organiques, agencés dans la masse de ladite matrice (2) suivant des directions sensiblement orthogonales à au moins l'une des faces de la pièce (1) et affleurant, à l'une de leurs extrémités au moins, au moins l'une desdites faces.

2. Pièce suivant la revendication 1, **caractérisée en ce que** lesdits tronçons de fils ou analogues (3,3',12 à 15) sont imprégnés à l'aide d'une résine d'imprégnation.

3. Pièce suivant la revendication 2, **caractérisée en ce que** lesdits tronçons de fils ou analogues (3,3',12 à 15) sont imprégnés à l'aide d'une résine phénolique et polymérisés.

4. Pièce suivant la revendication 2, **caractérisée en ce que** lesdits tronçons de fils ou analogues (3,3',12 à 15) sont imprégnés à l'aide d'une résine époxy et polymérisés.

5. Pièce suivant l'une des revendications 1 à 4, **caractérisée en ce que** lesdits tronçons de fils (3, 3',12 à 15) sont régulièrement distribués.

6. Pièce suivant la revendication 5, **caractérisée en ce que** lesdits tronçons de fils (3, 3',12 à 15) sont distribués en quinconce.

7. Pièce suivant l'une des revendications 1 à 6, **caractérisée en ce qu'**elle comporte des zones ayant un nombre différent de tronçons de fils (3, 3',12 à 15) par unité de surface.

8. Pièce suivant l'une des revendications 1 à 7, **caractérisée en ce que** l'une des faces est revêtue d'un tissu ou d'un feutre de silice ou de verre ou de matière organique (5) traversé par lesdits tronçons de fils (3,3', 12 à 15).

9. Procédé d'obtention d'une pièce selon l'une des revendications 1 à 8, **caractérisé en ce qu'**après moulage aux formes et dimensions générales de ladite pièce (1,11) à l'aide d'une matrice de silicone chargée, on met en place par piquage lesdits tronçons de fils (3,3', 12 à 15).

10. Procédé suivant la revendication 9, **caractérisé en ce qu'**on utilise des fils (3, 3',12 à 15) pré-imprégnés d'une résine appropriée et, après piquage, on polymérise cette résine.

11. Procédé suivant la revendication 9, **caractérisé en ce qu'**on utilise des fils (3, 3',12 à 15) non imprégnés et, après piquage, on imprègne la pièce (1,11) d'une résine appropriée et on polymérise cette résine.

12. Procédé suivant l'une des revendications 9 à 11, plus particulièrement **caractérisé en ce qu'**après polymérisation de la résine, les faces de la pièce (1,11), munie ou non dudit tissu ou feutre (5) sur l'une de ses faces, sont arasées pour éliminer les parties saillantes de fil (6,7).

13. Procédé suivant l'une des revendications 9 à 11, **caractérisé en ce que** la pièce est usinée aux cotes finales.

## Claims

1. Piece made from reinforced low-density ablative heat-protection material comprising a matrix (2) of elastomer and/or silicone resin, containing organic and/or inorganic components, **characterised in that** the reinforcement comprises rectilinear stiffened lengths of wire or the like (3, 3', 12 to 15), ceramic or glass, or organic materials, arranged in the mass of said matrix (2) in directions substantially orthogonal to at least one of the faces of the piece (1) and, at at least one of their ends, flush with at least one of said faces.

2. Piece according to Claim 1, **characterised in that** said lengths of wire or the like (3, 3', 12 to 15) are impregnated by means of an impregnation resin.

3. Piece according to Claim 2, **characterised in that** said lengths of wire or the like (3, 3', 12 to 15) are impregnated by means of a phenolic resin and polymerised.

4. Piece according to Claim 2, **characterised in that** said lengths of wire or the like (3, 3', 12 to 15) are impregnated by means of an epoxy resin and polymerised.

5. Piece according to one of Claims 1 to 4, **characterised in that** said lengths of wire (3, 3', 12 to 15) are evenly distributed.

6. Piece according to Claim 5, **characterised in that** said lengths of wire (3, 3', 12 to 15) are distributed in a staggered fashion.

7. Piece according to one of Claims 1 to 6, **characterised in that** it comprises zones having a different number of lengths of wire (3, 3', 12 to 15) per unit surface area.

8. Piece according to one of Claims 1 to 7, **characterised in that** one of the faces is covered with a cloth or felt made from silica or glass or organic material (5) through which said lengths of wire (3, 3', 12 to 15) pass.

9. Method of obtaining a piece according to one of Claims 1 to 8, **characterised in that**, after moulding to the general shapes and dimensions of said piece (1, 11) by means of a matrix of silicone containing a filler, said lengths of wire (3" 3', 12 to 15) are put in place by punching.

10. Method according to Claim 9, **characterised in that** wires (3, 3', 12 to 15) preimpregnated with a suitable resin are used and, after punching, this resin is polymerised.

11. Method according to Claim 9, **characterised in that** non-impregnated wires (3, 3', 12 to 15) are used and, after punching, the piece (1, 11) is impregnated with a suitable resin and this resin is polymerised.

12. Method according to one of Claims 9 to 11, more particularly **characterised in that**, after polymerisation of the resin, the faces of the piece (1, 11), provided or not with said cloth or felt (5) on one of its faces, are shaved in order to remove the projecting parts of wire (6, 7).

13. Method according to one of Claims 9 to 11, **characterised in that** the piece is machined to the final dimensions.

## Patentansprüche

1. Verstärktes wärmeabsorbierendes Hitzeschutz-Materialteil niedriger Dichte mit einer Elastomer- und/oder Siliconharzmatrix (2), die mit organischen und/oder anorganischen Komponenten gefüllt ist, **dadurch gekennzeichnet, daß** die Verstärkung aus geraden und versteiften Abschnitten von Fasern oder ähnlichem (3, 3', 12 bis 15), aus Keramik oder Glas oder organischem Material besteht, die in die Masse der Matrix (2) sich entlang von zu zumindest einer der Oberflächen des Materialteils (1) in im wesentlichen senkrechten Richtungen eingebracht sind und mit mindestens einem ihrer Enden sich bis zu wenigstens einer der Oberflächen erstrecken.

2. Materialteil nach Anspruch 1, **dadurch gekennzeichnet, daß** die Abschnitte aus Fasern oder ähnlichem (3, 3', 12 bis 15) mit Hilfe eines Imprägnierharzes imprägniert sind.

3. Materialteil nach Anspruch 2, **dadurch gekennzeichnet, daß** die Abschnitte aus Fasern oder ähnlichem (3, 3', 12 bis 15) mit Hilfe eines Phenolharzes imprägniert und polymerisiert sind.

4. Materialteil nach Anspruch 2, **dadurch gekennzeichnet, daß** die Abschnitte aus Fasern oder ähnlichem (3, 3', 12 bis 15) mit Hilfe eines Epoxyharzes imprägniert und polymerisiert sind.

5. Materialteil nach einem der Ansprüche 1 bis 4, **dadurch gekennzeichnet, daß** die Faserabschnitte (3, 3', 12 bis 15) gleichmäßig verteilt sind.

6. Materialteil nach Anspruch 5, **dadurch gekennzeichnet, daß** die Faserabschnitte (3, 3', 12 bis 15) versetzt angeordnet sind.

7. Materialteil nach einem der Ansprüche 1 bis 6, **dadurch gekennzeichnet, daß** Zonen vorgesehen sind, die eine unterschiedliche Anzahl von Faserabschnitten (3, 3', 12 bis 15) pro Oberflächeneinheit aufweisen.

8. Materialteil nach einem der Ansprüche 1 bis 7, **dadurch gekennzeichnet, daß** eine der Oberflächen mit einem Gewebe oder einem Filz aus Siliciumoxid oder Glas oder organischem Material (5) beschichtet ist, das bzw. der von den Faserabschnitten (3, 3', 12 bis 15) durchquert wird.

9. Verfahren zum Herstellen eines Materialteils nach einem :der Ansprüche 1 bis 8, **dadurch gekennzeichnet, daß** man nach Formgebung entsprechend den allgemeinen Formen und Abmessungen des Materialstücks (1, 11) mit Hilfe einer gefüllten Siliconmatrix die Faserabschnitte (3, 3', 12 bis15) durch Einstechen anbringt.

10. Verfahren nach Anspruch 9, **dadurch gekennzeichnet, daß** man mit einem geeigneten Harz vorimprägnierte Fasern (3, 3', 12 bis 15) verwendet und das Harz nach dem Einstechen polymerisiert.

11. Verfahren nach Anspruch 9, **dadurch gekennzeichnet, daß** man nichtimprägnierte Fasern (3, 3', 12 bis 15) verwendet und nach dem Einstechen das Materialteil (1, 11) mit einem geeigneten Harz imprägniert und das Harz polymerisiert.

12. Verfahren nach einem der Ansprüche 9 bis 11, insbesondere **dadurch gekennzeichnet, daß** die Oberflächen des Materialteils (1, 11), mit dem Gewebe oder Filz (5) auf einer seiner Oberflächen versehen oder nicht, nach der Polymerisation des Harzes abgeschliffen werden, um überstehende Faserstücke (6, 7) zu entfernen.

13. Verfahren nach einem der Ansprüche 9 bis 11, **dadurch gekennzeichnet, daß** das Materialteil an den Endseiten maschinell bearbeitet wird.
